# EUROPEAN PATENT APPLICATION

(11) **EP 2 770 703 A1**
(43) Date of publication of application: **27.08.2014**
(21) Application number: 14169435.6
(22) Date of filing: 08.10.2009
(51) Int. Cl.: H04M 1/02, H04M 1/23

(54) **Cellular phone apparatus**

(30) Priority: 16.12.2008 JP 2008319718
(62) Divisional of application: 09833277.8
(71) Applicant: NEC Corporation, Minato-ku, Tokyo 108-8001 (JP)
(72) Inventor: Tanaka, Motoshi, Kodama-gun, Saitama 367-0297 (JP)
(74) Representative: Glawe, Delfs, Moll

(57) **Abstract**

Cursor keys and enter keys are smoothly operated with both hands. Cellular phone apparatus 1 includes image display surface 3, first enter key 6a that is located on operation surface 10, at least four cursor keys 5a, 5b, 5c, 5d for moving a cursor in any desired direction on the operation surface, the cursor keys being located on the operation surface such that the cursor keys surround the first enter key, and second enter key 6b that is located outside virtual annular line c that connects four cursor keys 5a, 5b, 5c, 5d on operation surface 10.

## Description

### Technical Field

The present invention relates to a cellular phone apparatus, and in particular, relates to the arrangement of an enter key.

### Background Art

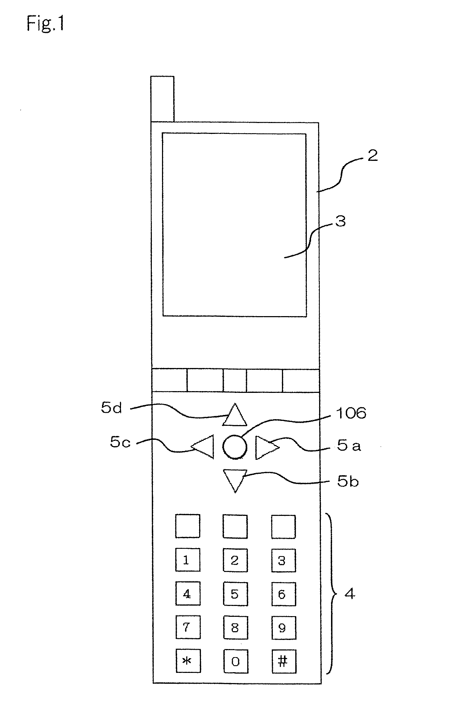

Fig. 1 is a front view of a cellular phone apparatus. The cellular phone apparatus typically includes digit keys 4 for inputting numerals etc., located in the lower part of casing 2, and cursor keys 5a, 5b, 5c, 5d located above digit keys 4. Cursor keys 5a, 5b, 5c, 5d are generally configured in four keys, *i.e.,* upper, lower, left and right keys, in order to move the cursor in the upward, downward, leftward and rightward directions on image display surface 3. Enter key 106 is located in the area that is surrounded by these keys. In order to select a phone number or a desired function (application) of the cellular phone apparatus, a user operates cursor keys 5a, 5b, 5c, 5d to move the cursor to a predetermined position, and then presses enter key 106. The selection of an item is accordingly completed, or the selected function is activated. Since cursor keys 5a, 5b, 5c, 5d and enter key 106 are concentrated in this manner, the cursor can be moved quickly and the enter key can be pressed quickly when the apparatus is operated with one hand (typically by the thumb of the right hand).

### Citation List

### Patent Documents

Patent Document 1: JP04-205514
Patent Document 2: JP2007-281659

### Summary of Invention

### Problem to be Solved

Cellular phone apparatuses may be operated with both hands, depending on users, although they are generally operated with one hand. There is also a need to operate the cellular phone apparatuses with both hands in order to quickly move the cursor and to quickly press the enter key. However, because of the concentrated arrangement of the cursor keys and the enter key, both hands may interfere with each other and thereby a smooth operation may be difficult when the cursor keys are operated with one hand and the enter key is operated with the other hand. The present invention has been made in view of the problem, and aims at providing a cellular phone apparatus that enables a smooth operation of cursor keys and an enter key with both hands.

### Solution to Solve the Problem

A cellular phone apparatus according to the invention comprises an image display surface; a first enter key that is located on an operation surface; at least four cursor keys for moving a cursor in any desired direction on the image display surface, the cursor keys being located on the operation surface such that the cursor keys surround the first enter key; and second enter key that is located outside a virtual annular line, the virtual annular line connecting the four cursor keys on the operation surface.

### Effects of Invention

The first enter key is located inside the virtual annular line, *i.e.,* at a position that is surrounded by the cursor keys. Thus, the cursor keys and the first enter key can be as smoothly and continuously operated with one hand as the enter key of the current cellular phone apparatus. On the other hand, the second enter key, which is located outside the virtual annular line, is less likely to cause operational interference with the cursor keys. Accordingly, it is possible to smoothly operate the cursor keys with one hand and to smoothly operate the second enter key with the other hand.

### Brief Description of Drawings

Fig. 1 is a front view showing a cellular phone apparatus according to a related art.
Fig. 2 is a front view showing a cellular phone apparatus according to an embodiment of the present invention.
Fig. 3 shows the cellular phone apparatus shown in Fig. 1 that is being operated with both hands.
Fig. 4 shows the cellular phone apparatus shown in Fig. 2 that is being operated with both hands.
Fig. 5 shows the cellular phone apparatus shown in Fig. 2 that is being operated with both hands.

### Explanation of Reference Numerals

- 1: Cellular phone apparatus
- 2: Casing
- 3: Image display surface
- 4: Digit key
- 5a, 5b, 5c, 5d: Cursor key
- 6a: First enter key
- 6b: Second enter key
- 7a, 7b: Key
- 10: Operation surface
- c: Virtual annular line
- d1, d2: Distance

### Embodiments of the Invention

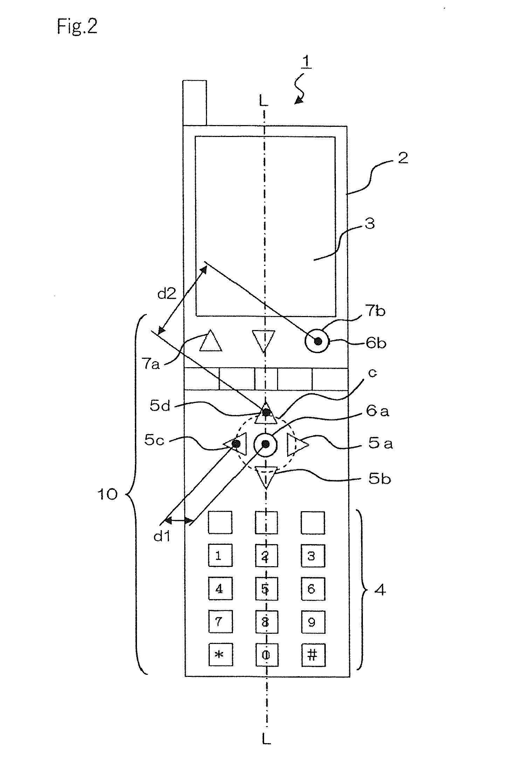

Hereinafter, a cellular phone apparatus according to an embodiment of the present invention is described with reference to the drawings. Fig. 2 is a front view of the cellular phone apparatus.

Cellular phone apparatus 1 includes image display surface 3 located in the upper part of casing 2 and various keys located on operation surface 10 of casing 2. The various keys consist of digit keys 4 that are used for inputting numerals etc., cursor keys 5a, 5b, 5c, 5d for moving a cursor (not shown) in any desired direction on image display surface 3, first and second enter keys 6a, 6b and so on.

Cursor keys 5a, 5b, 5c, 5d are located on operation surface 10 such that they surround first enter key 6a. The cursor keys move the cursor in any desired direction, typically in the upward, downward, leftward and rightward directions, and consist of four keys 5a, 5b, 5c, 5d each corresponding to each direction. However, five or more keys may be provided in order to move the cursor in an oblique direction. Cursor keys 5a, 5b, 5c, 5d are formed in separate buttons in this embodiment, but the cursor keys may be formed as a ring type button that moves the cursor in the upward, downward, leftward and rightward directions according to the angular position at which the button is pressed. Cursor keys 5a, 5b, 5c, 5d are concentrated in order to ensure good operability. Specifically, cursor keys 5a, 5b, 5c, 5d are arranged adjacent to each other along virtual annular line c. Virtual annular line c is circular in this embodiment, but may be elliptical. In this embodiment, first enter key 6a is located at the center of the circular area that is defined by the circular virtual annular line c.

Second enter key 6b is provided on operation surface 10 outside virtual annular line c that connects four cursor keys 5a, 5b, 5c, 5d. By pressing either first enter key 6a or second enter key 6b, the position of the cursor is determined, or a predetermined function designated by the cursor is activated. The functions of enter keys 6a, 6b are completely identical in this embodiment, but may be partially different from each other.

In view of operability with both hands, second enter key 6b is located apart from cursor keys 5a, 5b, 5c, 5d. Specifically, distance d2 between the cursor key that is closest to second enter key 6b (cursor key 5d shown in Fig. 2) and second enter key 6b is larger than distance d1 between the cursor key that is farthest from first enter key 6a among the four cursor keys and first enter key 6a. In Fig. 2, all cursor keys 5a, 5b, 5c, 5d are located at the same distance from first enter key 6a, and hence all the cursor keys are "the farthest cursor keys".

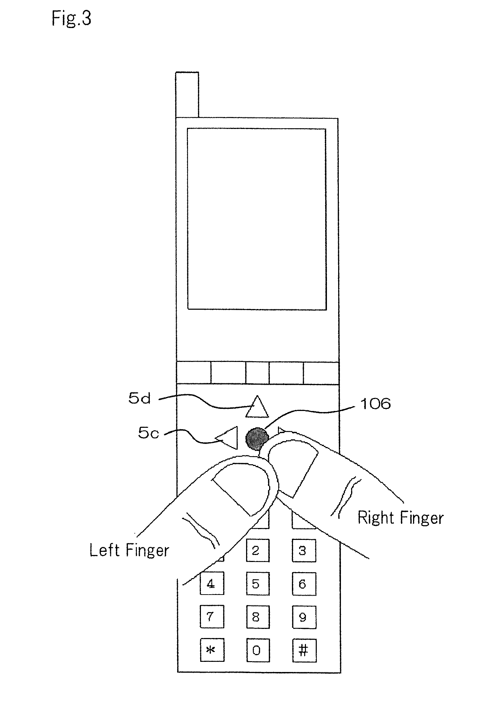

Fig. 3 shows the current cellular phone apparatus shown in Fig. 1 that is being operated with both hands. Since the cursor keys (only 5c and 5d are shown) and enter key 106 are arranged close to each other, the right hand and the left hand overlap each other, for example, when cursor keys 5a, 5b, 5c, 5d are operated with the left hand and enter key 106 is operated with the right hand. As a result, the operability during operation with both hands is significantly worsened.

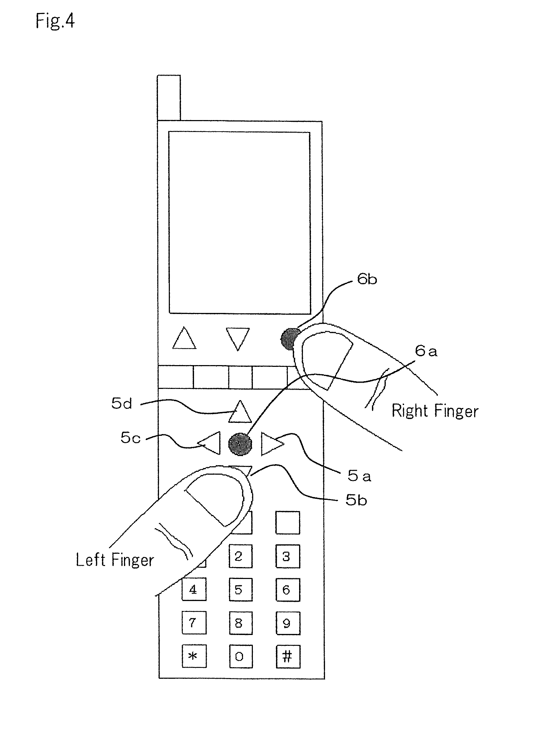

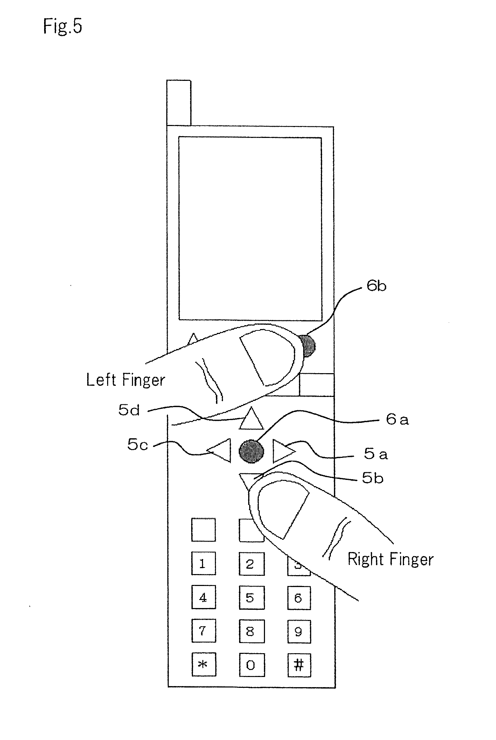

Figs. 4 and 5 show the cellular phone apparatus according to the embodiment shown in Fig. 2 that is being operated with both hands. In Fig. 4, the cursor keys and the digit keys are operated with the left hand while the enter key is operated with the right hand, and in Fig. 5, the cursor keys and the digit keys are operated with the right hand while the enter key is operated with the left hand. Second enter key 6b that is additionally mounted allows the operation of the cursor keys etc. and the operation of the enter key to be allocated to the right hand and to the left hand, enabling a quick operation as compared with performing all the operations with one hand. Since second enter key 6b that is additionally mounted is placed at a position that does not affect the operation of the cursor keys, the right hand and the left hand do not overlap each other when the enter key and the cursor keys are operated with both hands, and the operation can be quicker. By arranging second enter key 6b apart from the other buttons, accidental pressing of adjacent buttons when the enter key is to be operated can be avoided.

It is also possible to only use first enter key 6a instead of using second enter key 6b. In this case, all the keys can be operated with one hand with the same operability as the current cellular phone apparatuses. If first enter key 6a is not provided and only second enter key 6b is provided, then extensive movement of a finger, which leads to bad operability, is required when the enter key and the cursor keys are repeatedly operated with one hand, especially when second enter key 6b is apart from cursor keys 5a, 5b, 5c, 5d.

The cellular phone apparatus according to the present invention may be provided with the following features.
(1) Cellular phone apparatus 1 may have means for inactivating key functions (not shown) that temporarily inactivate the functions of either first enter key 6a or second enter key 6b. When a user prefers using the cellular phone apparatus with the same operability as the operability of a conventional apparatus, the user may temporarily inactivate the functions of second enter key 6b. When a user tends to accidentally press adjacent cursor keys 5a, 5b, 5c, 5d during an operation to press first enter key 6a due to, for example, a large hand size, the user may temporarily inactivate first enter key 6a. The term "temporary" means that the function that has been inactivated can be recovered. The term "temporary" also includes permanently using the apparatus while keeping the functions of one of the enter keys inactive according to user's preference.
(2) Based on the user's preference, such as the dominant hand, it is possible to selectively allocate "the operation of enter key" and "the operation of cursor keys and the digit keys" to one hand and to the other hand, respectively. For this purpose, cellular phone apparatus 1 may have means for allocating second enter key (not shown). Referring to Fig. 2, the means for allocating second enter key selectively allocates one key out of two keys 7a, 7b as second enter key 6b. Two keys 7a, 7b are located on both sides of cellular phone apparatus 1 with respect to axis L-L that connects the center of image display surface 3 and the center of operation surface 10. Axis L-L may typically be the long axis of the cellular phone apparatus, but may be the short axis thereof when the cellular phone apparatus has a laterally wider operation surface. Second enter key is one of the two keys, the one being allocated by the means for allocating second enter key. In Fig. 2, key 7b is allocated as second enter key 6b. The means for allocating second enter key may be configured as a switching button (not shown) that is located on the side surface or on the back surface of casing 2, or may be configured as software that works through the operation of the cursor.
(3) One second enter key and another second enter key may be arranged on both sides of cellular phone apparatus 1 with respect to axis L-L, respectively. For example, two keys 7a, 7b shown in Fig. 2 may be both configured as second enter keys. This arrangement does not require any special setup regardless of which is the user's dominant hand, allowing the user to use one of the second enter keys that is located at a more preferable position.

The present invention has been described in detail with reference to the embodiments. However, it should be understood that various changes and modifications can be made within the scope of the claims.

This application claims priority from Japanese Patent Application No. 2008-319718 filed on December 16, 2008, which is hereby incorporated by reference herein in its entirety.

## Claims

1. A cellular phone apparatus (1) comprising:
an image display surface (3);
a first enter key (6a) that is located on an operation surface (10);
at least four cursor keys (5a, 5b, 5c, 5d) for moving a cursor in any desired direction on the image display surface (3), the cursor keys (5a, 5b, 5c, 5d) being located on the operation surface (10) such that the cursor keys (5a, 5b, 5c, 5d) surround the first enter key (6a); and
a second enter key (6b) that is located outside a virtual annular line (6), the virtual annular line connecting the four cursor keys (5a, 5b, 5c, 5d) on the operation surface (10).

2. The cellular phone apparatus (1) according to claim 1, wherein a distance between a cursor key that is closest to the second enter key (6b) among the at least four cursor keys (5a, 5b, 5c, 5d) and the second enter key (6b) is larger than a distance between a cursor key that is farthest from the first enter key (6a) among the at least four cursor keys (5a, 5b, 5c, 5d) and the first enter key (6a).

3. The cellular phone apparatus (1) according to claim 1 or 2, further comprising means for inactivating key functions that temporarily inactivates functions of either the first enter key (6a) or the second enter key (6b).

4. The cellular phone apparatus (1) according to any one of claims 1 to 3, further comprising means for allocating a second enter key that selectively allocates one key out of two keys (7a, 7b) as the second enter key (6b), the two keys (7a, 7b) being located on both sides with respect to an axis (L-L) that connects a center of the image display surface (3) and a center of the operation surface (10), respectively,
wherein the second enter key (6b) is one of the two keys (7a, 7b), the one being allocated by the means for allocating the second enter key.

5. The cellular phone apparatus (1) according to any one of claims 1 to 3, wherein one second enter key (7a) is provided on one side and another second enter key (7b) is provided on the other side with respect to an axis (L-L) that connects a center of the image display surface (3) and a center of the operation surface (10).
